(19)

Europäisches
Patentamt
European
Patent Office
Office européen
des brevets

(11) **EP 4 020 347 A1**

(12) **EUROPEAN PATENT APPLICATION**
published in accordance with Art. 153(4) EPC

(43) Date of publication:
**29.06.2022 Bulletin 2022/26**

(21) Application number: **20853740.7**

(22) Date of filing: **13.08.2020**

(51) International Patent Classification (IPC):
*G06Q 10/06* (2012.01)   *G06Q 40/06* (2012.01)

(52) Cooperative Patent Classification (CPC):
**G06Q 10/06; G06Q 40/06**

(86) International application number:
**PCT/JP2020/030779**

(87) International publication number:
**WO 2021/033621 (25.02.2021 Gazette 2021/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.08.2019 US 201962889768 P**

(71) Applicant: **Sony Group Corporation
Tokyo 108-0075 (JP)**

(72) Inventors:
• **SASAKI, Takahiro
Tokyo 141-0022 (JP)**
• **TAJIRI, Takao
Tokyo 141-0022 (JP)**
• **MORITA, Takumi
Tokyo 141-0022 (JP)**
• **YAMASHITA, Takashi
Tokyo 141-0022 (JP)**

(74) Representative: **MFG Patentanwälte
Meyer-Wildhagen Meggle-Freund
Gerhard PartG mbB
Amalienstraße 62
80799 München (DE)**

(54) **INFORMATION PROCESSING DEVICE, INFORMATION PROCESSING METHOD, AND
PROGRAM**

(57)     To implement more appropriate evaluation for
an action by a person to be evaluated.

Provided is an information processing device including an evaluation unit that performs evaluation of an action by a person to be evaluated on the basis of action
result data indicating a result of the action by the person
to be evaluated regarding a predetermined task, in which
the evaluation unit performs contribution analysis that
analyzes a contribution of the action by the person to be
evaluated to an evaluation item in the predetermined
task, and evaluates the action by the person to be evaluated on the basis of a result of the contribution analysis,
and the contribution analysis includes generating, by a
classifier generated by a machine learning algorithm, a
two-dimensional map in which a plurality of objects is
arranged on a plane, on the basis of input attributes of
the plurality of objects that is targets of the action by the
person to be evaluated and the action result data for the
objects.

FIG. 6

EP 4 020 347 A1

**Description**

TECHNICAL FIELD

The present disclosure relates to an information processing device, an information processing method, and a program.

BACKGROUND ART

Regarding a task, it is very important to appropriately evaluate an executer of the task. For this purpose, many mechanisms for automating or assisting the evaluation as described above have been devised. For example, Patent Document 1 devises a mechanism for rating an investment trust fund.

CITATION LIST

PATENT DOCUMENT

Patent Document 1: Japanese Patent Application Laid-Open No. 2009-245368

SUMMARY OF THE INVENTION

PROBLEMS TO BE SOLVED BY THE INVENTION

In particular, in a case of performing evaluation of an executer who executes a task with a high specialty such as an investment trust fund, it is required to perform more appropriate evaluation on the basis of a multifaceted analysis.

SOLUTIONS TO PROBLEMS

According to a certain viewpoint of the present disclosure, provided is an information processing device including an evaluation unit that performs evaluation of an action by a person to be evaluated on the basis of action result data indicating a result of the action by the person to be evaluated regarding a predetermined task, in which the evaluation unit performs contribution analysis that analyzes a contribution of the action by the person to be evaluated to an evaluation item in the predetermined task, and evaluates the action by the person to be evaluated on the basis of a result of the contribution analysis, and the contribution analysis includes generating, by a classifier generated by a machine learning algorithm, a two-dimensional map in which a plurality of objects is arranged on a plane, on the basis of input attributes of the plurality of objects that is targets of the action by the person to be evaluated and the action result data for the objects.

Furthermore, according to another viewpoint of the present disclosure, provided is an information processing method including performing evaluation, by a processor, of an action by a person to be evaluated on the basis of action result data indicating a result of the action by the person to be evaluated regarding a predetermined task, in which performing the evaluation further includes performing contribution analysis that analyzes a contribution of the action by the person to be evaluated to an evaluation item in the predetermined task, and evaluating the action by the person to be evaluated on the basis of a result of the contribution analysis, and the contribution analysis includes generating, in a classifier generated by a machine learning algorithm, a two-dimensional map in which a plurality of objects is arranged on a plane, on the basis of input attributes of the plurality of objects that is targets of the action by the person to be evaluated and the action result data for the objects.

Furthermore, according to another viewpoint of the present disclosure, provided is a program for causing a computer to function as an information processing device including an evaluation unit that performs evaluation of an action by a person to be evaluated on the basis of action result data indicating a result of the action by the person to be evaluated regarding a predetermined task, in which the evaluation unit performs contribution analysis that analyzes a contribution of the action by the person to be evaluated to an evaluation item in the predetermined task, and evaluates the action by the person to be evaluated on the basis of a result of the contribution analysis, and the contribution analysis includes generating, in a classifier generated by a machine learning algorithm, a two-dimensional map in which a plurality of objects is arranged on a plane, on the basis of input attributes of the plurality of objects that is targets of the action by the person to be evaluated and the action result data for the objects.

BRIEF DESCRIPTION OF DRAWINGS

Fig. 1 is a block diagram illustrating a functional configuration example of a learning device 10 according to an embodiment of the present disclosure.

Fig. 2 is a block diagram illustrating a functional configuration example of an evaluation device 20 according to the present embodiment.

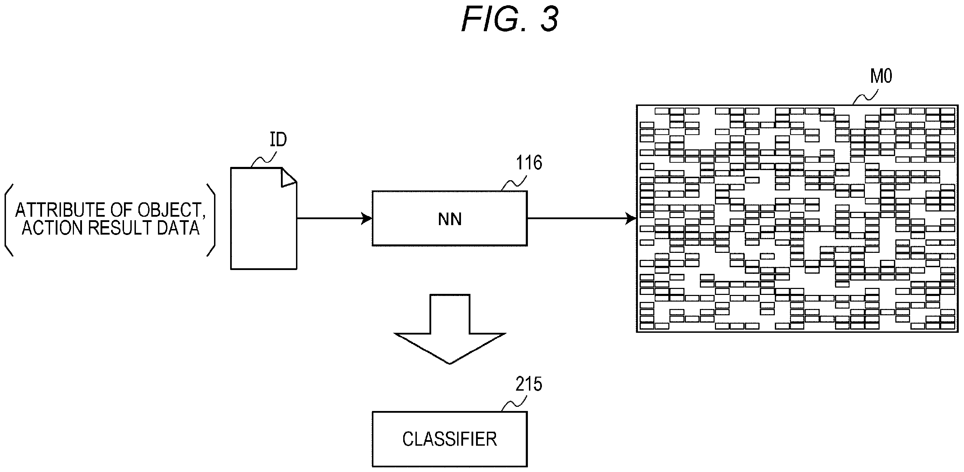

Fig. 3 is a diagram for explaining generation of a classifier 215 according to the embodiment and a two-dimensional map M0 output by the classifier 215.

Fig. 4 is a diagram illustrating an example of an active return map M1 according to the embodiment.

Fig. 5 is a diagram illustrating an example of an active weight map M2 according to the embodiment.

Fig. 6 is a diagram illustrating an example of an active return & active weight map M3 according to the embodiment.

Fig. 7 is a diagram illustrating an example of a trading volume map M4 according to the embodiment.

Fig. 8 is a diagram illustrating an example of an active return & trading volume map M5 according to the embodiment.

Fig. 9 is a diagram illustrating an example of an order amount map M6 according to the embodiment.

Fig. 10 is a diagram illustrating an example of a person-in-charge-of-customers age map M7 according to the embodiment.

Fig. 11 is a diagram illustrating an example of an order amount map & person-in-charge-of-customers age map M8 according to the embodiment.

Fig. 12 is a diagram illustrating an example of a contract map M9 according to the embodiment.

Fig. 13 is a diagram illustrating an example of a customer visit map M10 according to the embodiment.

Fig. 14 is an example of a contract & number of visits map according to the embodiment.

Fig. 15 is a flowchart illustrating an example of a flow of processing by the evaluation device 20 according to the embodiment.

Fig. 16 is a diagram illustrating an example of a comparison table comparing evaluations for a plurality of persons to be evaluated according to the embodiment.

Fig. 17 is a block diagram illustrating a hardware configuration example of an information processing device 90 according to the embodiment.

MODE FOR CARRYING OUT THE INVENTION

Hereinafter, preferred embodiments of the present disclosure will be described in detail with reference to the accompanying drawings. Note that, in the present specification and the drawings, components having substantially the same functional configuration are denoted by the same reference signs, and redundant explanations will be omitted.

Note that, the description will be given in the following order.

1. Embodiment

    1.1. Background
    1.2. Functional configuration example of learning device 10
    1.3. Functional configuration example of evaluation device 20
    1.4. Evaluation based on contribution analysis
    1.5. Flow of processing

2. Hardware configuration example
3. Conclusion

<1. Embodiment>

<<1.1. Background>>

As described above, regarding a certain task, it is very important to appropriately evaluate an executer (hereinafter, also referred to as a person to be evaluated) of the task regardless of business areas and business types. However, there is a case where it is difficult to perform appropriate evaluation in a case where a specialty of the task executed by the person to be evaluated is high and an evaluator does not have expertise regarding the task equivalent to that of the person to be evaluated.

Here, as an example, a case is assumed where evaluation of a fund manager is performed in a certain fund. The evaluator belonging to the fund performs evaluation for, for example, a contracted fund manager or a new fund manager as a candidate for a contract in the future as a person to be evaluated.

However, here, in a case where the evaluator belonging to the fund does not have expert knowledge equivalent to that of the person to be evaluated, it is difficult for the evaluator to appropriately evaluate the person to be evaluated. Furthermore, a situation or the like may occur in which the evaluator cannot grasp explanations of a strategy and the like by the person to be evaluated, and has to accept words of the person to be evaluated.

For this reason, in particular, in the case of evaluating a person to be evaluated who executes a task with a high specialty such as a fund manager (or fund), it is important to visualize the evaluation on the basis of a multifaceted analysis.

Furthermore, in addition to the high level of specialty, there are many factors that make evaluation of the person to be evaluated difficult. For example, a sales staff is assumed who performs sales activities to win a contract with a customer, in an organization such as a company.

Sales activities performed by the sales staff described above include a wide variety of activities including customer visit, and characteristics of a customer and a person in charge of customers strongly affect success or failure of the contract. It is therefore difficult to construct a theory for establishing the contract, and it may be difficult to correctly evaluate the sales activities of the person to be evaluated.

A technical concept according to an embodiment of the present invention has been conceived by focusing on points described above, and implements more appropriate evaluation for an action by the person to be evaluated.

For this purpose, one of features of an evaluation device 20 according to the embodiment of the present invention is to perform contribution analysis that analyzes contribution of the action by the person to be evaluated to an evaluation item in a predetermined task, and evaluate the action by the person to be evaluated on the basis of a result of the contribution analysis.

Hereinafter, a detailed description will be given of a functional configuration for implementing the evaluation as described above.

<<1.2. Functional configuration example of learning device 10>>

First, a functional configuration example of a learning device 10 according to the present embodiment will be described. The learning device 10 according to the present embodiment is an information processing device that generates a classifier 215 used for the contribution analysis by the evaluation device 20.

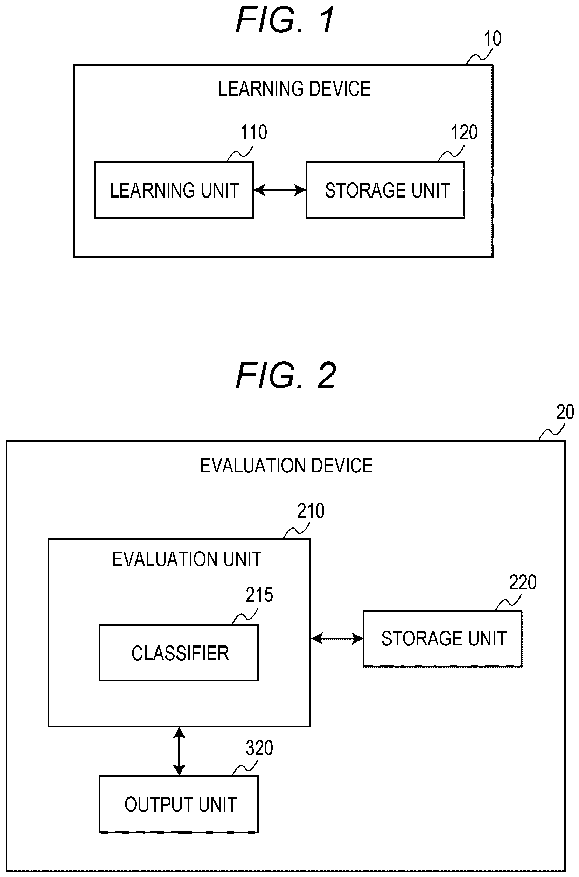

Fig. 1 is a block diagram illustrating the functional configuration example of the learning device 10 according to the present embodiment. As illustrated in Fig. 1, the learning device 10 according to the present embodiment includes a learning unit 110, a storage unit 120, and the like.

(Learning unit 110)

The learning unit 110 according to the present embodiment generates the classifier 215 used for the contribution analysis by the evaluation device 20 by a machine learning algorithm.

For example, the learning unit 110 according to the present embodiment may generate the classifier 215 by unsupervised learning using a neural network.

Details of learning by the learning unit 110 according to the present embodiment will be separately described in detail. Note that, a function of the learning unit 110 according to the present embodiment is implemented by a processor such as a GPU.

(Storage unit 120)

The storage unit 120 according to the present embodiment stores various types of information regarding learning executed by the learning unit 110. For example, the storage unit 120 stores a structure of a network used for learning by the learning unit 110, various parameters regarding the network, learning data, and the like.

In the above, the functional configuration example of the learning device 10 according to the present embodiment has been described. Note that, the functional configuration described above with reference to Fig. 1 is merely an example, and the functional configuration of the learning device 10 according to the present embodiment is not limited to the example.

For example, the learning device 10 according to the present embodiment may further include an operation unit that receives an operation by the user, a display unit that displays various types of information, and the like.

The functional configuration of the learning device 10 according to the present embodiment can be flexibly modified depending on specifications and operations.

<<1.3. Functional configuration example of evaluation device 20>>

Next, a functional configuration example of the evaluation device 20 according to the present embodiment will be described. The evaluation device 20 according to the present embodiment is an information processing device that performs evaluation of the action by the person to be evaluated.

Fig. 2 is a block diagram illustrating the functional configuration example of the evaluation device 20 according to the present embodiment. As illustrated in Fig. 2, the evaluation device 20 according to the present embodiment includes an evaluation unit 210, a storage unit 220, an output unit 230, and the like.

(Evaluation unit 210)

The evaluation unit 210 according to the present embodiment performs evaluation of the action by the person to be evaluated on the basis of action result data indicating a result of the action by the person to be evaluated regarding a predetermined task.

Examples of the person to be evaluated according to the present embodiment include the above-described fund manager, and the like. In this case, the predetermined task described above may be asset management. Furthermore, examples of the action by the person to be evaluated described above include a trade transaction of a financial product such as a stock. Furthermore, the action result data may be data in which a result of the transaction (for example, a date of purchasing a certain stock, an amount of purchase, a date of selling a certain stock, an amount of sale, and the like) is recorded.

Furthermore, the person to be evaluated according to the present embodiment may be, for example, a sales staff belonging to a company or the like. In this case, the predetermined task described above may be a contract with a company. Furthermore, examples of the action by the person to be evaluated described above include various sales activities such as visit to a customer (including a prospective customer), telephone call, email, and presentation. Furthermore, the action result data may be data in which results (for example, a visit date, the number of telephone calls, the number of emails, the presence or absence of presentation, and the like) of the sales activities as described above are recorded.

Furthermore, one of features of the evaluation unit 210 according to the present embodiment is to perform the contribution analysis using the classifier 215 and perform evaluation of the action by the person to be evaluated on the basis of a result of the contribution analysis.

The contribution analysis according to the present embodiment may include generating, by the classifier 215 generated by the machine learning algorithm, a two-dimensional map in which a plurality of objects is arranged on a plane, on the basis of attributes of the plurality of objects that is targets of the action by the person to be evaluated input and the action result data for the objects.

Furthermore, the contribution analysis according to the present embodiment may further include expressing an intensity regarding the evaluation item and an intensity regarding the action by the person to be evaluated in a heat map form, in the two-dimensional map output by the classifier 215.

A detailed description will be separately given of the contribution analysis using the classifier 215 according to the present embodiment and the evaluation based on the result of the contribution analysis. Note that, a function of the evaluation unit 210 according to the present embodiment is implemented by a processor such as a GPU or a CPU.

(Storage unit 220)

The storage unit 220 according to the present embodiment stores various types of information used by the evaluation device 20. The storage unit 220 stores information, for example, action result data indicating a result of the action by the person to be evaluated, a program used by the evaluation unit 210, a result of evaluation by the evaluation unit 210, and the like.

(Output unit 230)

The output unit 230 according to the present embodiment outputs the result of the evaluation by the evaluation unit 210. For example, the output unit 230 according to the present embodiment may display the result of the evaluation described above. In this case, the output unit 230 includes various displays. Furthermore, for example, the output unit 230 may print the result of the evaluation described above on a paper medium. In this case, the output unit 230 includes a printer.

In the above, the functional configuration example of the evaluation device 20 according to the present embodiment has been described. Note that, the functional configuration described above with reference to Fig. 2 is merely an example, and the functional configuration of the evaluation device 20 according to the present embodiment is not limited to the example.

For example, the evaluation unit 210 and the output unit 230 do not necessarily have to be provided in the same device. As an example, the output unit 230 provided in a locally arranged device may acquire a result of evaluation by the evaluation unit 210 provided in the separate device arranged in the cloud and output the result.

The functional configuration of the evaluation device 20 according to the present embodiment can be flexibly modified depending on specifications and operations.

<<1.4. Evaluation based on contribution analysis>>

Next, a description will be given of the contribution analysis using the classifier 215 and the evaluation based on the result of the contribution analysis, by the evaluation unit 210 according to the present embodiment.

The contribution analysis according to the present embodiment analyzes the contribution of the action by the person to be evaluated to the evaluation item in the predetermined task.

Furthermore, the contribution analysis according to the present embodiment includes generating, by the classifier 215, a two-dimensional map in which a plurality of objects is arranged on a plane, on the basis of attributes of the plurality of objects that is targets of the action by the evaluator input and the action result data for the objects.

For example, in a case where the task is asset management, an object according to the present embodiment can be a name of stock.

Furthermore, for example, in a case where the task is a contract with a customer, the object according to the present embodiment can be a customer (which may include a prospective customer).

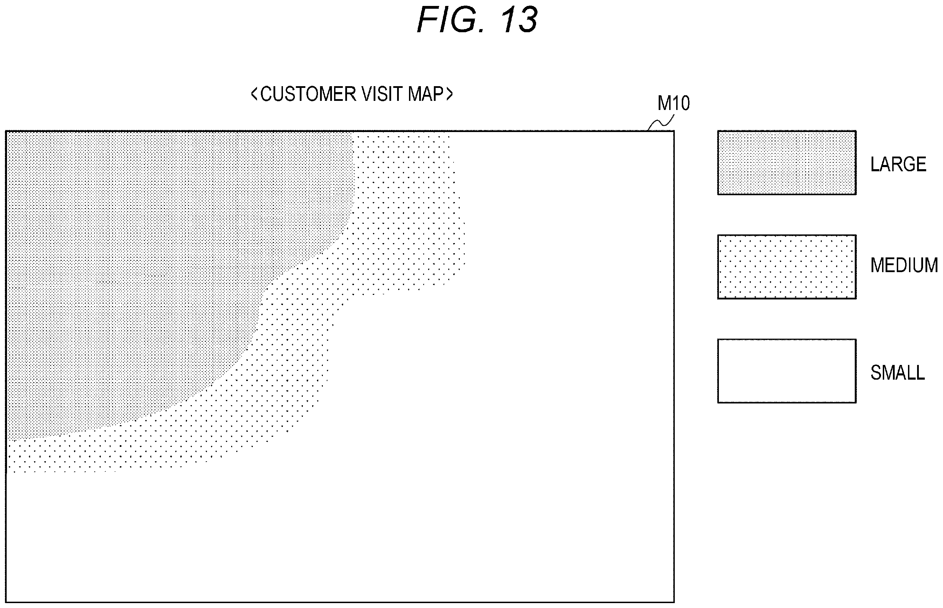

First, a method of generating the classifier 215 according to the present embodiment will be described. Fig. 13 is a diagram for explaining generation of the classifier 215 according to the present embodiment and a two-dimensional map M0 output by the classifier 215.

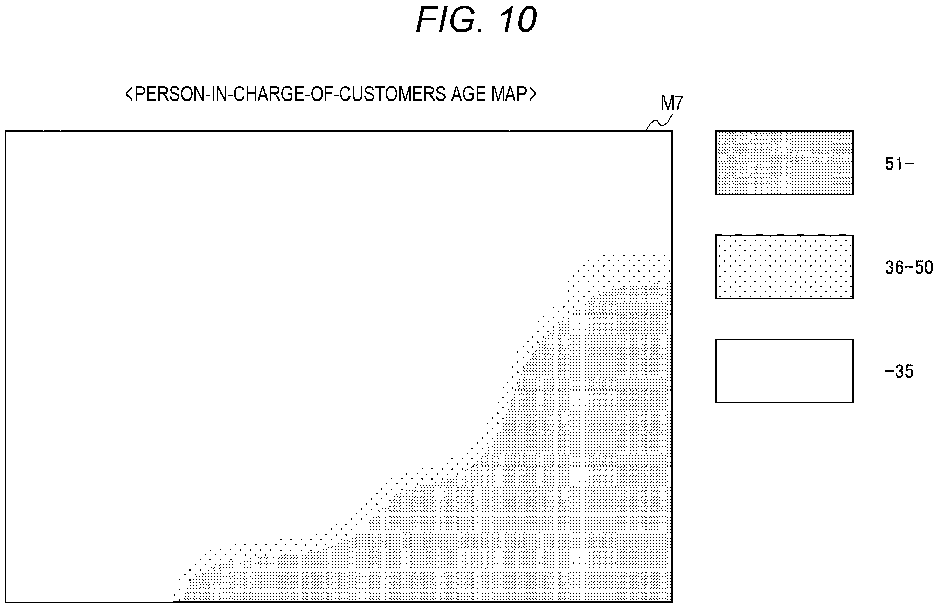

The classifier 215 according to the present embodiment outputs the two-dimensional map M0 in which the plurality of objects is arranged on the plane, using the attributes of the plurality of objects that is targets of the action by the evaluator and the action result data for the objects as the input data ID. Note that, each of rectangles in the two-dimensional map M0 illustrated in Fig. 10 indicates the objects described above.

That is, it can be said that the classifier 215 according to the present embodiment has a function of mapping a high-dimensional data set to a low-dimensional space while preserving a phase structure of a data distribution.

The classifier 215 according to the present embodiment can be generated, for example, by repeatedly performing unsupervised learning in which the input data ID described above is given to a neural network (NN) 116 and the two-dimensional map M0 is output.

The classifier 215 according to the present embodiment may be, for example, a self-organizing map. On the other hand, the classifier 215 according to the present embodiment may be generated by using an algorithm such as variational autoencoder (VAE).

The evaluation unit 210 according to the present embodiment performs the contribution analysis using the classifier 215 generated as described above. At this time, one of the features of the evaluation unit 210 according to the present embodiment is to express an intensity regarding the evaluation item in the predetermined task and an intensity regarding an action by a target person in a heat map form in the two-dimensional map M0 output by the classifier 215.

For example, in a case where the predetermined task is asset management, examples of the evaluation item described above include active return. Here, the active return is an index indicating a difference between a return of a portfolio and a return of a benchmark.

The evaluation unit 210 according to the present embodiment may calculate the active return on the basis of an attribute of a stock (here, the return of the benchmark described above) and action result data (here, the return of the portfolio), and generate an active return map M1 in which the active return is expressed in a heat map form on the two-dimensional map M0.

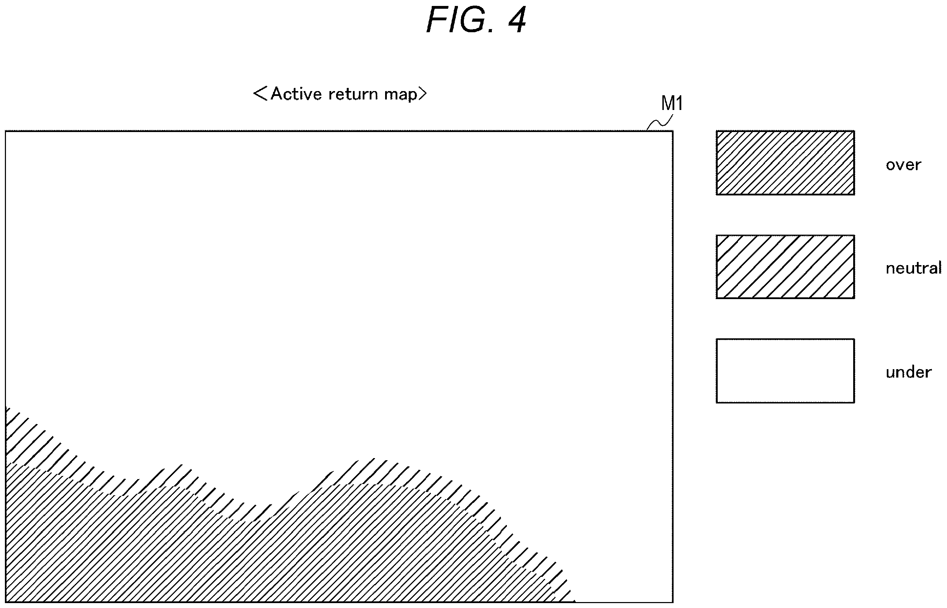

Fig. 4 is a diagram illustrating an example of the active return map M1 according to the present embodiment. In the active return map M1 illustrated in Fig. 4, the intensity of the active return is expressed by density of oblique lines.

Specifically, in the active return map M1 illustrated in Fig. 4, a region in which the return of the portfolio greatly exceeds the return of the benchmark is represented by high density oblique lines, and a region in which there is almost no difference between the return of the portfolio and the return of the benchmark is represented by low density oblique lines. Furthermore, a region in which the return of the portfolio is greatly below the return of the benchmark is represented by plain (white).

Note that, in the active return map M1 illustrated in Fig. 4, the intensity of the active return is represented by three stages described above to prioritize visibility, but the evaluation unit 210 according to the present embodiment may express the intensity of the active return in more stages and continuously.

Furthermore, in the active return map M1 illustrated in Fig. 4, expression of each stock arranged on a plane is omitted to prioritize visibility. The same applies to each heat map described below.

Furthermore, the evaluation unit 210 according to the present embodiment may further generate a heat map indicating the intensity regarding the action by the target person, as a target to be compared with a heat map indicating the intensity regarding the evaluation item in the predetermined task, such as the active return map M1.

For example, active weight can be mentioned as an example of an index of the intensity regarding the action of the target person described above. The active weight is an index indicating a deviation width between a composition ratio of a stock in the portfolio and a composition ratio of a stock in the benchmark.

The evaluation unit 210 according to the present embodiment may calculate the active weight on the basis of an attribute of a stock (here, the composition ratio of the stock in the benchmark described above) and action result data (here, the composition ratio of the stock in the portfolio), and generate an active weight map M2 in which the active weight is expressed in a heat map form on the two-dimensional map M0.

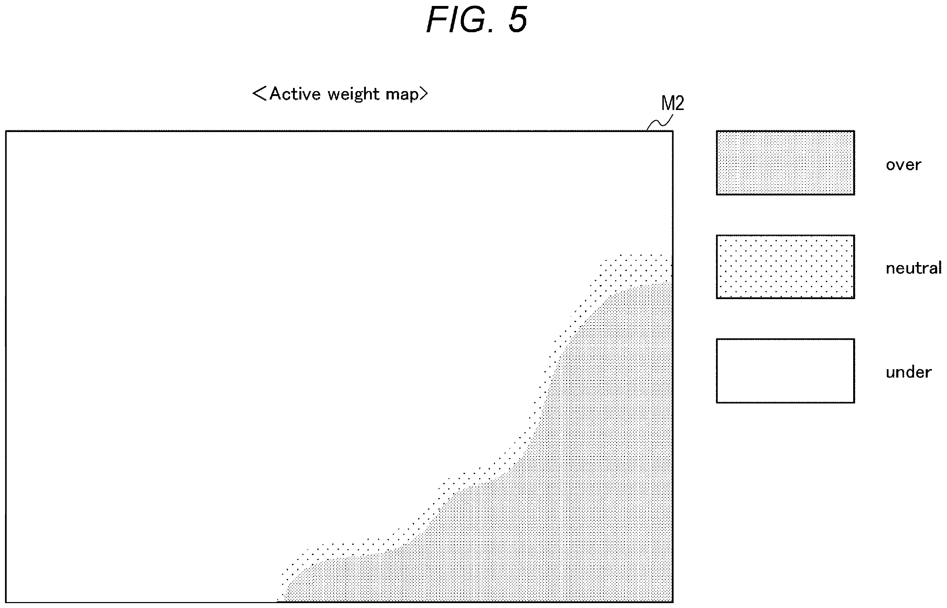

Fig. 5 is a diagram illustrating an example of the active weight map M2 according to the present embodiment. In the active weight map M2 illustrated in Fig. 5, the intensity of the active return is expressed by density of dots.

Specifically, in the active weight map M2 illustrated in Fig. 5, a region in which stock holdings in the portfolio greatly exceeds stock holdings in the benchmark is represented by high density dots. Furthermore, a region in which there is almost no difference between the stock holdings in the portfolio and the stock holdings in the benchmark is represented by low density dots. Furthermore, a region in which the stock holdings in the portfolio is greatly below the stock holdings in the benchmark is represented by plain (white).

Note that, in the active weight map M2 illustrated in Fig. 5, the intensity of the active weight is represented by three stages described above to prioritize visibility, but the evaluation unit 210 according to the present embodiment may express the intensity of the active weight in more stages and continuously.

In the above, specific examples have been described of the heat map indicating the intensity regarding the evaluation item and the heat map indicating the intensity regarding the action of the target person according to the present embodiment.

The evaluation unit 210 according to the present embodiment may further generate a heat map in which the two generated heat maps described above are superimposed on each other.

Furthermore, at this time, the evaluation unit 210 according to the present embodiment may evaluate whether or not the contribution of the action by the person to be evaluated to the evaluation item is due to an ability of the person to be evaluated, on the basis of the heat map (two-dimensional map) in which the two heat maps described above are superimposed on each other.

For example, the evaluation unit 210 according to the present embodiment may generate an active return & active weight map M3 by superimposing the active return map M1 and the active weight map M2 on each other.

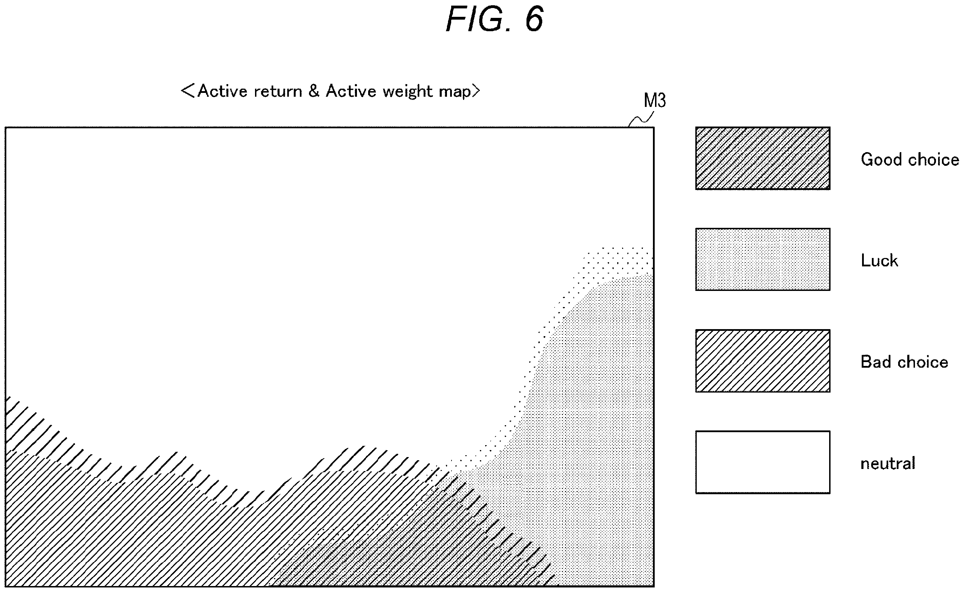

Fig. 6 is a diagram illustrating an example of the active return & active weight map M3 according to the present embodiment. At this time, the evaluation unit 210 according to the present embodiment can evaluate whether or not the contribution of the action by the person to be evaluated to the active return is due to the ability of the person to be evaluated, on the basis of the active return & active weight map M3.

Specifically, the evaluation unit 210 according to the present embodiment may evaluate a region in which a region having a high intensity regarding the evaluation item and a region having a high intensity regarding the action by the person to be evaluated overlap with each other, as a region having a high contribution by the ability of the person to be evaluated.

For example, in the active return & active weight map M3 illustrated in Fig. 6, a region in which the active return is high and the active weight is high is expressed by superimposition of high density oblique lines and high density dots. The region can be said to be a region in which the stock holdings are large and a profit is made due to the action by the person to be evaluated.

The evaluation unit 210 according to the present embodiment may therefore evaluate a region in which a region having a high intensity of the active return and a region having a high intensity of the active weight overlap with each other, like the region described above, as a region (Good choice) in which a profit is generated due to the ability of the person to be evaluated.

Furthermore, the evaluation unit 210 according to the present embodiment may evaluate a region in which a region having a high intensity regarding the evaluation item and a region having a low intensity regarding the action by the person to be evaluated overlap with each other, as a region having a low contribution by the ability of the person to be evaluated, that is, a region in which a profit is generated by luck (fluke).

For example, in the active return & active weight map M3 illustrated in Fig. 6, a region in which the active return is high and the active weight is low is expressed by high density oblique lines. The region can be said to be a region in which the stock holdings are small but a profit is made relatively.

The evaluation unit 210 according to the present embodiment may therefore evaluate a region in which a region having a high intensity of the active return and a region having a low intensity of the active weight overlap with each other, like the region described above, as a region (Luck) in which a profit is generated due to luck.

Furthermore, the evaluation unit 210 may evaluate a region in which a region having a low intensity regarding the evaluation item and a region having a high intensity regarding the action by the person to be evaluated overlap with each other, as a region in which there is a possibility that an action by the action by the person to be evaluated affects a decrease in the evaluation item.

For example, in the active return & active weight map M3 illustrated in Fig. 6, a region in which the active return is low and the active weight is high is expressed by high density dots. This region can be said to be a region in which the stock holdings are large and a loss is generated due to the action by the person to be evaluated.

The evaluation unit 210 according to the present embodiment may therefore evaluate a region in which a region having a low intensity of the active return and a region having a high intensity of the active weight overlap with each other, like the region described above, as a region (Bad choice) in which a loss is generated due to the action by the person to be evaluated.

Furthermore, the evaluation unit 210 according to the present embodiment can also calculate a contribution ratio (intentional profit ratio (IPR)) indicating a profit generated by the ability of the person to be evaluated out of profits generated in asset management, on the basis of an area of each region evaluated as described above.

For example, in the case of the example illustrated in Fig. 13, IPR may be calculated by the following mathematical expression.

$$\text{IPR = Good choice / Good choice + Luck}$$

As described above, according to the evaluation using the evaluation unit 210 according to the present embodiment, it is possible to more appropriately evaluate the ability of the person to be evaluated as compared with a case where the evaluation of the person to be evaluated is simply performed only with the active return.

Furthermore, the evaluation unit 210 can also perform evaluation such as how the ability of the person to be evaluated changes by continuously calculating IPR every predetermined period.

Furthermore, in the above description, the case has been exemplified where the evaluation unit 210 performs evaluation of the person to be evaluated on the basis of the active return and the active weight; however, the evaluation by the evaluation unit 210 according to the present embodiment is not limited to such an example.

The evaluation unit 210 according to the present embodiment may perform evaluation of the person to be evaluated on the basis of, for example, the active return and trading volume.

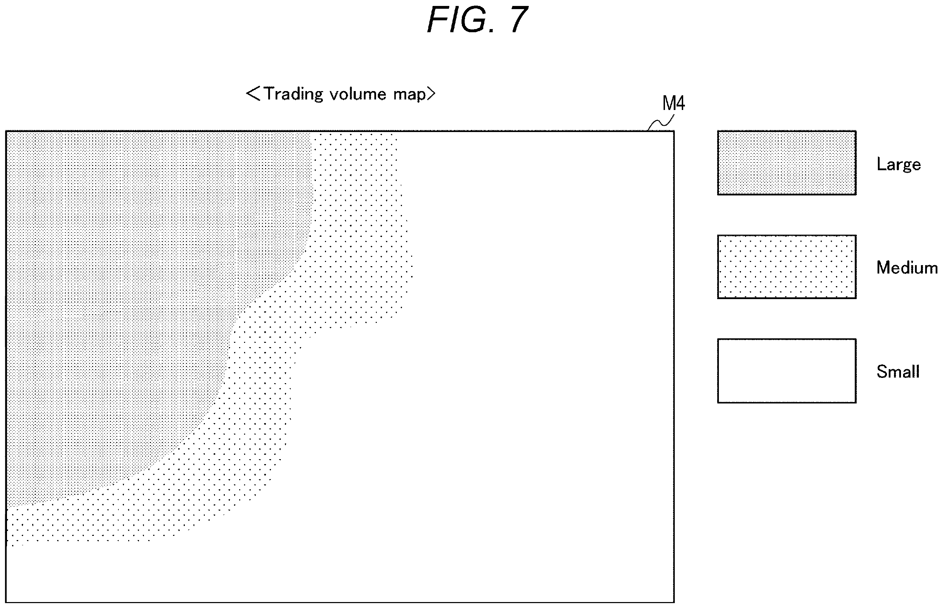

Fig. 7 is a diagram illustrating an example of a trading volume map M4 according to the present embodiment. In the trading volume map M4 illustrated in Fig. 7, the intensity of the trading volume is expressed by density of oblique lines.

Specifically, in the trading volume map M4 illustrated in Fig. 7, a region in which the trading volume is large is represented by high density oblique lines, and a region in which the trading volume is medium is represented by low density oblique lines. Furthermore, a region in which the trading volume is small is represented by plain (white).

Note that, in the trading volume map M4 illustrated in Fig. 7, the intensity of the trading volume is represented by three stages described above to prioritize visibility, but the evaluation unit 210 according to the present embodiment may express the intensity of the trading volume in more stages and continuously.

Furthermore, the evaluation unit 210 according to the present embodiment may generate an active return & trading volume map M5 by superimposing the active return map M1 and the trading volume map M4 on each other.

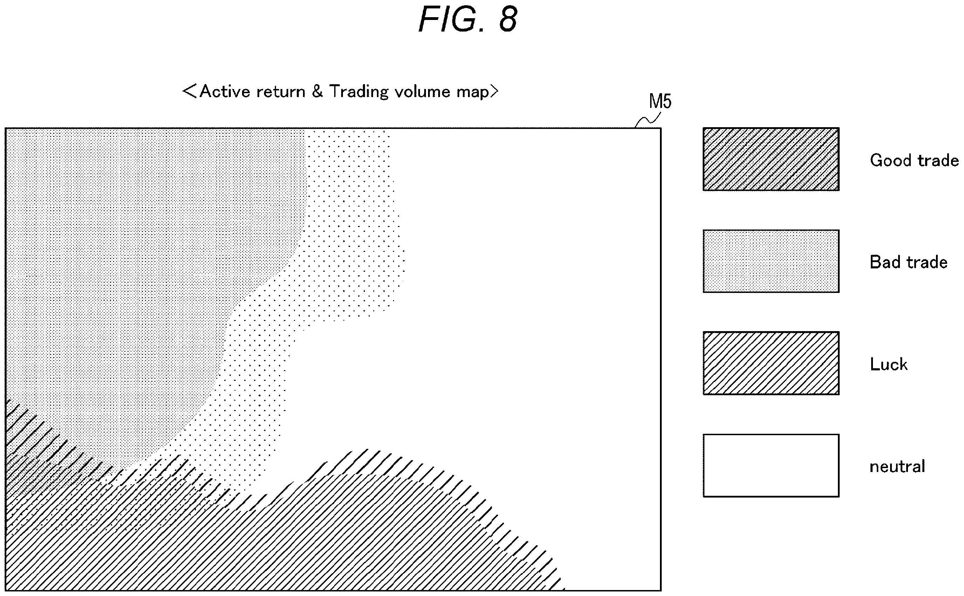

Fig. 8 is a diagram illustrating an example of the active return & trading volume map M5 according to the present embodiment. At this time, the evaluation unit 210 according to the present embodiment can evaluate whether or not the contribution of the action by the person to be evaluated to the active return is due to the ability of the person to be evaluated, on the basis of the active return & trading volume map M5.

For example, in the active return & trading volume map M5 illustrated in Fig. 8, a region in which the active return is high and the trading volume is large is expressed by superimposition of high density oblique lines and high density dots. The region can be said to be a region in which the amount of transactions of the stock is large and a profit is made due to the action by the person to be evaluated.

The evaluation unit 210 according to the present embodiment may therefore evaluate a region in which the region having a high intensity of the ctive return and a region having high intensity of the trading volume overlap with each other, as a region (Good trade) in which a profit is generated due to the ability of the person to be evaluated.

On the other hand, in the active return & trading volume map M5 illustrated in Fig. 8, a region in which the active return is high and the trading volume is small is expressed by high density oblique lines. The region can be said to be a region in which the amount of transactions of the stock is small but a profit is made relatively.

The evaluation unit 210 according to the present embodiment may therefore evaluate a region in which a region having a high intensity of the active return and a region having a low intensity of the trading volume overlap with each other, as a region (Luck) in which a profit is generated due to luck.

On the other hand, in the active return & trading volume map M5 illustrated in Fig. 8, a region in which the active return is low and the trading volume is large is expressed by high density dots. The region can be said to be a region in which the amount of transactions of the stock is large and a loss is generated due to the action by the person to be evaluated.

The evaluation unit 210 according to the present embodiment may therefore evaluate a region in which a region having a low intensity of the active return and a region having a high intensity of the trading volume overlap with each other, as a region (Bad trade) in which a loss is generated due to the action by the person to be evaluated (due to miscalculation).

In the above, the evaluation using the evaluation unit 210 according to the present embodiment has been described above with specific examples. Note that, the evaluation unit 210 according to the present embodiment can express, in a heat map form, various attributes and indexes based on the attributes, in addition to the active return, the active weight, and the trading volume described above.

The evaluation unit 210 according to the present embodiment may generate a heat map regarding, for example, a price book-value ratio (PBR), a price earnings ratio (PER), stock yield, and the like, and the evaluation unit 210 may perform evaluation based on the heat map.

According to the evaluation method using the evaluation unit 210 according to the present embodiment, it is possible to perform evaluation, for example, the ability has been exhibited (or misread has occurred) in investment to which industrial sector, or investment in which regional area.

Furthermore, according to the evaluation method using the evaluation unit 210 according to the present embodiment, it is possible to perform evaluation, for example, whether the result of not making a profit is due to the influence of the market environment or due to the investment style.

In the above, the contribution analysis and the evaluation based on the contribution analysis have been described in a case where the task is asset management and the action by the person to be evaluated is trade transaction of a financial product.

On the other hand, the task according to the present embodiment and the action by the person to be evaluated are not limited to the examples described above. For example, the task according to the present embodiment may be a contract with a customer. Furthermore, the action of the person to be evaluated in this case can be a sales activity.

In the following, with specific examples, a description will be given of the contribution analysis in a case where the person to be evaluated is a sales staff belonging to a company or the like, and evaluation based on the contribution analysis.

Note that, also in this case, the attribute of the object and the action result data are similarly input to the classifier 215. In a case where the task is a contract with a customer, the object may be a customer (which may include a prospective customer) or a person in charge of customers.

Examples of the attribute in a case where the object is a customer include a total market value, sales, an operating profit, the number of employees, a region, a business type, and the like.

Furthermore, examples of the attribute in a case where the object is a person in charge of customers include a position, an age, a gender, an affiliation, a background, and the like.

Furthermore, examples of the action result data input to the classifier 215 include the number of customer visits (frequency), the number of emails (frequency), the number of telephone calls (frequency) or call time, success or failure of a contract, an order amount, and the like. A set of the action result data as described above may be input to the classifier 215 by the number of sales staffs to be the person to be evaluated.

Hereinafter, with specific examples, a description will be given of the contribution analysis and the evaluation based on the result of the contribution analysis.

For example, an order amount can be mentioned as an example of the evaluation item of the person to be evaluated in a case where the task is a contract with a customer. For this reason, the evaluation unit 210 according to the present embodiment may generate an order amount map M6 in which the order amount of the corresponding person to be evaluated is expressed in a heat map form, on the basis of the attribute of the target object and the action result data input.

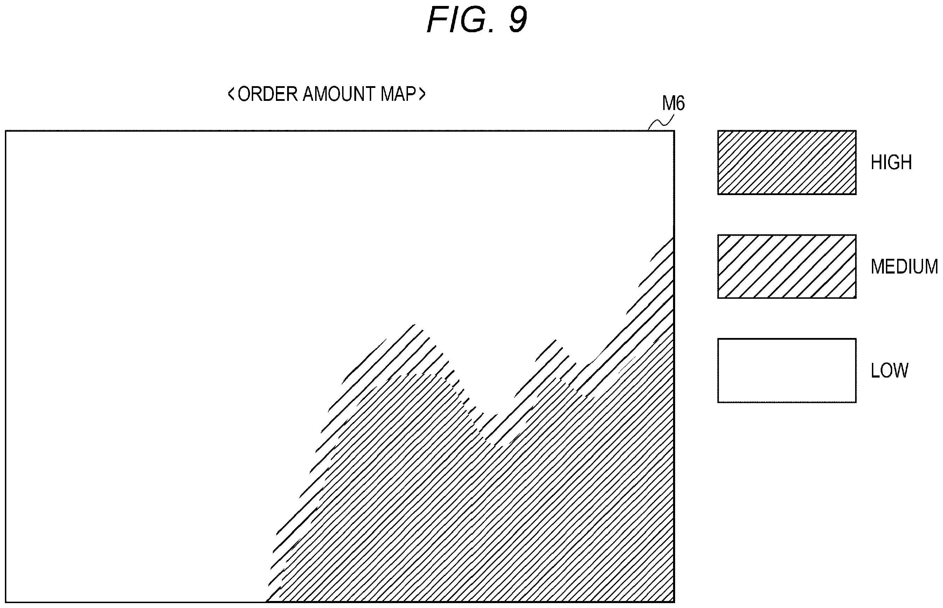

Fig. 9 is a diagram illustrating an example of the order amount map M6 according to the present embodiment. In the order amount map 6 illustrated in Fig. 9, the intensity of the order amount of the corresponding person to be evaluated is expressed by density of oblique lines.

Specifically, in the order amount map M6 illustrated in Fig. 9, a region in which the order amount is more than a value of a place is represented by high density oblique lines, and a region in which the order amount is medium is represented by low density oblique lines. Furthermore, a region in which the order amount is lower than a predetermined value (including 0) is represented by plain (white).

Note that, in the order amount map M6 illustrated in Fig. 9, the intensity of the order amount is represented by three stages described above to prioritize visibility, but the evaluation unit 210 according to the present embodiment may express the intensity of the order amount in more stages and continuously.

Note that, various actions are assumed for the attribute of the object that can be compared with the order amount; however, here, as an example, the age of the person in charge of customers is adopted.

Fig. 10 is a diagram illustrating an example of a person-in-charge-of-customers age map M7 according to the present embodiment. In the person-in-charge-of-customers age map M7 illustrated in Fig. 10, the intensity of the age of the person in charge of customers is expressed by density of dots.

Specifically, in the person-in-charge-of-customers age map M7 illustrated in Fig. 10, a region in which the age of the person in charge of customers is 51 years old or older is represented by high density dots, and a region in which the age of the person in charge of customers is 36 to 50 years old is represented by low density dots. Furthermore, a region in which the age of the person in charge of customers is 35 years old or younger is represented by plain (white).

Note that, in the person-in-charge-of-customers age map M7 illustrated in Fig. 10, the intensity of the age of the person in charge of customers is represented by three stages described above to prioritize visibility, but the evaluation unit 210 according to the present embodiment may express the intensity of the age in more stages and continuously.

Furthermore, the evaluation unit 210 according to the present embodiment may superimpose the order amount map M6 and the person-in-charge-of-customers age map M7 generated on each other, to generate an order amount map & person-in-charge-of-customers age map M8.

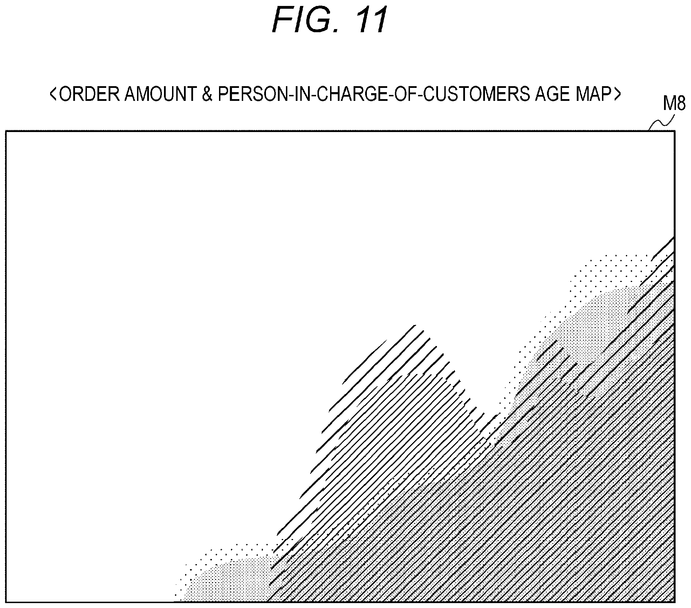

Fig. 11 is a diagram illustrating an example of the order amount map & person-in-charge-of-customers age map M8 according to the present embodiment. Referring to Fig. 11, it can be seen that the distribution of the region in which the intensity of the order amount is high (high density oblique lines) is similar to the distribution of the region in which the intensity of the age of the person in charge of customers is high (high density dots), and an area of the region in which both overlap with each other (high density oblique lines and dots) is wide.

In such a case, the evaluation unit 210 according to the present embodiment may evaluate that the corresponding person to be evaluated tends to obtain a high order amount from the person in charge of customers whose age is 51 years old or older.

Furthermore, the evaluation unit 210 may evaluate that a region of the person in charge of customers whose age is 51 years old or older in a region in which the order amount is still low (or 0), that is, a region represented only by high density dots in the order amount map & person-in-charge-of-customers age map M8 has a possibility of exhibiting strength for the corresponding person to be evaluated.

By viewing the evaluation as described above, a manager or the like can perform appropriate personnel placement to a company having the person in charge of customers who is 51 years old or older and still has a low order amount (or 0), such as causing the corresponding person to be evaluated to perform sales activities.

Furthermore, in the order amount map & person-in-charge-of-customers age map M8 illustrated in Fig. 11, it can be seen that a region (plain white) in which the order amount is low (or 0) and a region (plain white) of the person in charge of customers whose age is 35 years old or younger widely overlap with each other.

In this case, the evaluation unit 210 may further superimpose a heat map regarding the action (for example, customer visit, or the like) of the corresponding person to be evaluated and perform further evaluation.

Here, for example, in a case where the intensity of the customer visit by the corresponding person to be evaluated is low in the region of the person in charge of customers whose order amount is low and age is 35 years old or younger, the evaluation unit 210 may evaluate that the person to be evaluated does not have a problem with the person in charge of customers who is 35 years old or younger and there is a possibility that the order amount increases due to repeated customer visit in the future.

As described above, the evaluation unit 210 according to the present embodiment can also perform multifaceted evaluation based on a plurality of attributes and actions.

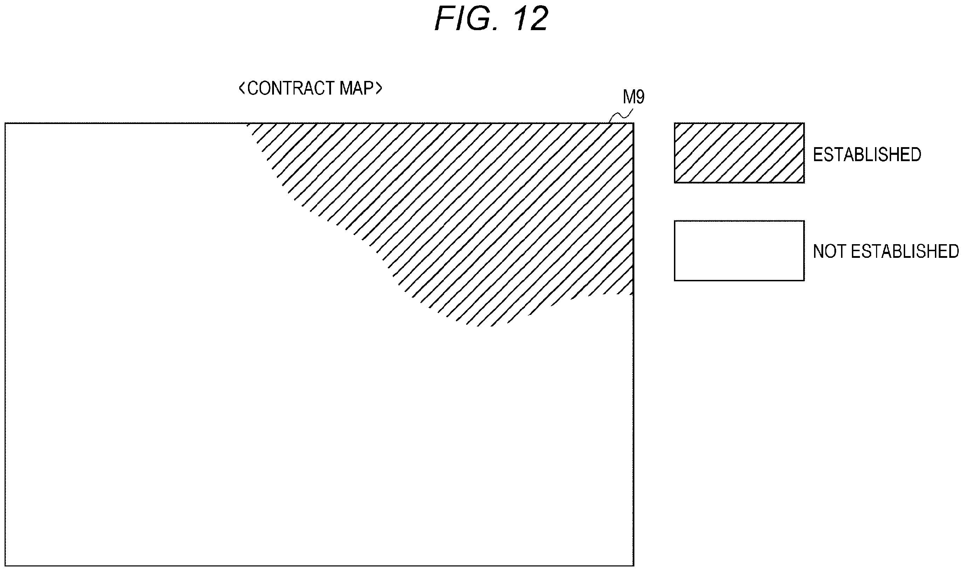

Next, another evaluation regarding sales activities will be described with reference to Figs. 12 to 15.

Fig. 12 is a diagram illustrating an example of a contract map M9 according to the present embodiment. In the contract map M9 illustrated in Fig. 12, whether a contract with a customer is established or not is expressed by presence or absence of oblique lines.

Specifically, in the contract map M9 illustrated in Fig. 12, a region in which a contract with a customer is established is indicated by oblique lines, and a region in which a contract with a customer is not established is indicated by plain white.

Furthermore, Fig. 13 is a diagram illustrating an example of a customer visit map M10 according to the present embodiment. In the customer visit map M10 illustrated in Fig. 13, the intensity of the customer visit by the corresponding person to be evaluated is expressed by density of dots.

Specifically, in the customer visit map M10 illustrated in Fig. 13, a region in which the number of customer visits is larger than a predetermined number is represented by high density dots, and a region in which the number of customer visits is medium is represented by low density dots. Furthermore, a region in which the number of customer visits is lower than a predetermined number is represented by plain white.

Note that, in the customer visit map M10 illustrated in Fig. 13, the intensity of the customer visit is represented by three stages described above to prioritize visibility, but the evaluation unit 210 according to the present embodiment may express the intensity of the customer visit in more stages and continuously.

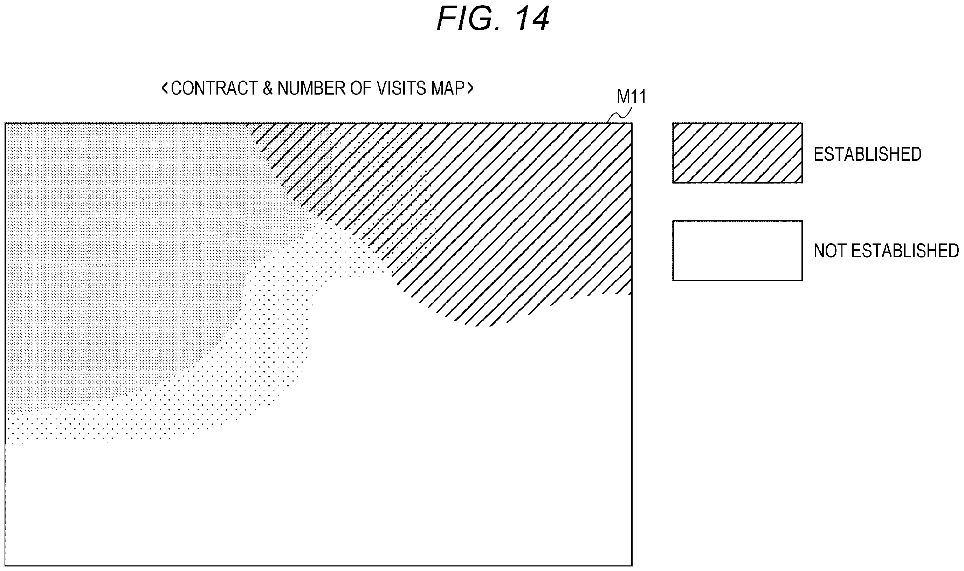

Furthermore, Fig. 14 is an example of a contract & number of visits map according to the present embodiment.

Referring to Fig. 14, it can be seen that the distribution of the region in which the contract is established (oblique lines) is different from the distribution of the region in which the intensity of the customer visit is high (high density dots), and a region in which both overlap each other (oblique lines and high density dots) is very small.

In such a case, the evaluation unit 210 according to the present embodiment may evaluate that the customer visit performed by the corresponding person to be evaluated has not led to the establishment of the contract (at present).

Furthermore, in such a case, the evaluation unit 210 may further superimpose a heat map regarding another action (for example, the number of telephone calls or the like) by the corresponding person to be evaluated and perform further evaluation.

Here, for example, in a region in which a contract is established, in a case where the intensity regarding the number of telephone calls by the person to be evaluated who performs exterior packaging is high, the evaluation unit 210 may evaluate that the possibility of getting a contract is higher by conducting business by telephone call than by performing customer visit.

By viewing the evaluation as described above, the manager or the like can give appropriate advice to the person to be evaluated regarding future sales activities.

<<1.5. Flow of processing>>

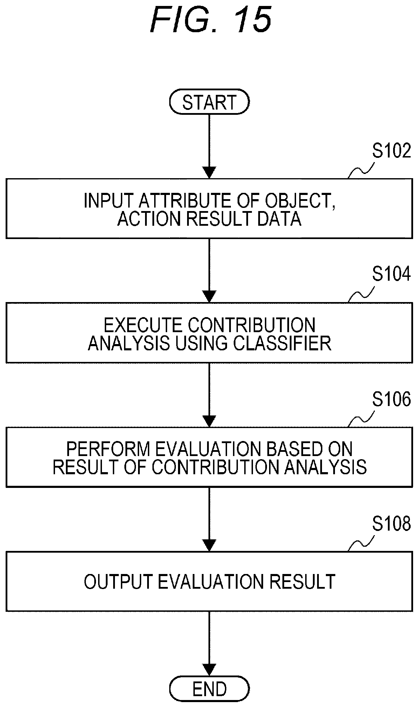

Next, a flow of processing by the evaluation device 20 according to the present embodiment will be described with an example. Fig. 15 is a flowchart illustrating an example of the flow of the processing by the evaluation device 20 according to the present embodiment.

As illustrated in Fig. 15, first, the evaluation unit 210 inputs the attribute of the object and the action result data to the classifier 215 (S102).

Next, the evaluation unit 210 executes the contribution analysis using the classifier (S104).

Next, the evaluation unit 210 performs the evaluation based on the result of the contribution analysis in step S104 (S106).

Next, the output unit 230 outputs the result of the evaluation in step S106 (S108).

For example, the output unit 230 may output each map or the like illustrated in Figs. 4 to 14.

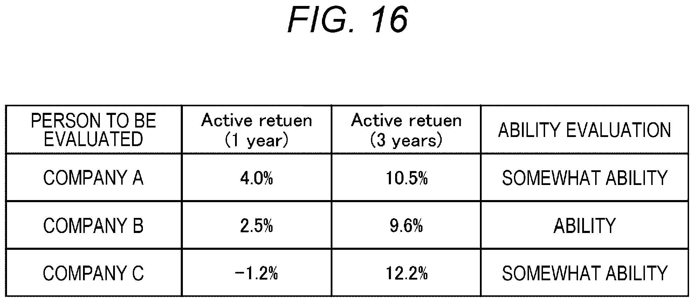

Furthermore, the output unit 230 may output, for example, a comparison table or the like in which evaluations for a plurality of persons to be evaluated are compared with each other as illustrated in Fig. 16.

In the example of the comparison table illustrated in Fig. 16, regarding each of a company A, a company B, and a company C that are persons to be evaluated, active returns, and results of the evaluation by the evaluation unit 210 are described.

For example, by referring to the comparison table as illustrated in Fig. 16, the evaluator belonging to the fund can consider selecting a person to be contracted in the future from among the plurality of persons to be evaluated, canceling the contract of the fund manager who is currently contracted, and the like.

<2. Hardware configuration example>

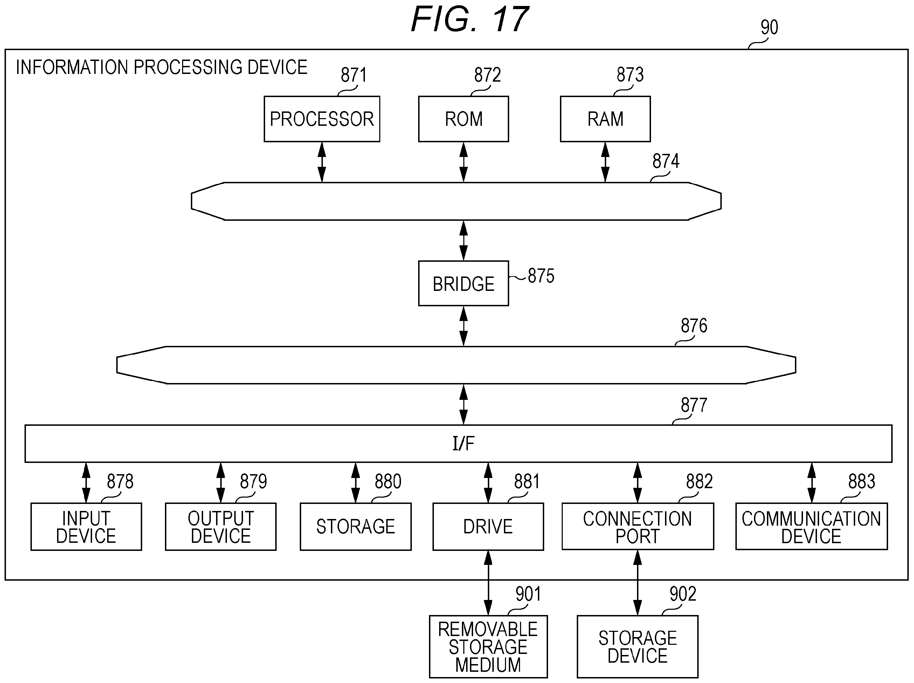

Next, a description will be given of a hardware configuration example common to the learning device 10 and the evaluation device 20 according to the embodiment of the present disclosure. Fig. 17 is a block diagram illustrating a hardware configuration example of an information processing device 90 according to the embodiment of the present disclosure. The information processing device 90 may be a device having a hardware configuration equivalent to that of each of the devices described above. As illustrated in Fig. 17, the information processing device 90 includes, for example, a processor 871, a ROM 872, a RAM 873, a host bus 874, a bridge 875, an external bus 876, an interface 877, an input device 878, an output device 879, a storage 880, a drive 881, a connection port 882, and a communication device 883. Note that, the hardware configuration illustrated here is an example, and some of the components may be omitted. Furthermore, components other than the components illustrated here may be further included.

(Processor 871)

The processor 871 functions as an arithmetic processing device or a control device, for example, and controls entire operation of the components or a part thereof on the basis of various programs recorded in the ROM 872, the RAM 873, the storage 880, or a removable recording medium 901.

(ROM 872, RAM 873)

The ROM 872 is a means for storing a program read by the processor 871, data used for calculation, and the like. The RAM 873 temporarily or permanently stores, for example, a program read by the processor 871, various parameters that appropriately change when the program is executed, and the like.

(Host bus 874, bridge 875, external bus 876, interface 877)

The processor 871, the ROM 872, and the RAM 873 are connected to each other via, for example, the host bus 874 capable of high-speed data transmission. On the other hand, the host bus 874 is connected to the external bus 876 having a relatively low data transmission speed via, for example, the bridge 875. Furthermore, the external bus 876 is connected to various components via the interface 877.

(Input device 878)

As the input device 878, for example, a mouse, a keyboard, a touch panel, a button, a switch, a lever, and the like are used. Moreover, as the input device 878, a remote controller (hereinafter, remote) may be used enabled to transmit a control signal using infrared rays or other radio waves. Furthermore, the input device 878 includes an audio input device such as a microphone.

(Output device 879)

The output device 879 is a device enabled to notify the user of acquired information visually or audibly, for example, a display device such as a Cathode Ray Tube (CRT), LCD, or organic EL, an audio output device such as a speaker or a headphone, a printer, a mobile phone, a facsimile, or the like. Furthermore, the output device 879 according to the present disclosure includes various vibration devices enabled to output tactile stimulation.

(Storage 880)

The storage 880 is a device for storing various data. As the storage 880, for example, a magnetic storage device such as a hard disk drive (HDD), a semiconductor storage device, an optical storage device, a magneto-optical storage device, or the like is used.

(Drive 881)

The drive 881 is, for example, a device that reads information recorded on the removable recording medium 901 such as a magnetic disk, an optical disk, a magneto-optical disk, or a semiconductor memory, or writes information on the removable recording medium 901.

(Removable recording medium 901)

The removable recording medium 901 is, for example, a DVD medium, a Blu-ray (registered trademark) medium, an HD DVD medium, various semiconductor storage media, or the like. Of course, the removable recording medium 901 may be, for example, an IC card on which a non-contact type IC chip is mounted, an electronic device, or the like.

(Connection port 882)

The connection port 882 is, for example, a port for connecting an externally connected device 902, such as a Universal Serial Bus (USB) port, an IEEE1394 port, a Small Computer System Interface (SCSI), an RS-232C port, or an optical audio terminal.

(Externally connected device 902)

The externally connected device 902 is, for example, a printer, a portable music player, a digital camera, a digital video camera, an IC recorder, or the like.

(Communication device 883)

The communication device 883 is a communication device for connecting to a network, and is, for example, a communication card for a wired or wireless LAN, Bluetooth (registered trademark), or Wireless USB (WUSB), a router for optical communication, a router for Asymmetric Digital Subscriber Line (ADSL), a modem for various communication, or the like.

<3. Conclusion>

As described above, the evaluation device 20 according to the embodiment of the present disclosure includes the evaluation unit 210 that performs evaluation of the action by the person to be evaluated on the basis of the action result data indicating the results of the action by the person to be evaluated regarding the predetermined task. Furthermore, one of the features of an evaluation unit 210 according to the embodiment of the present disclosure is to perform contribution analysis that analyzes contribution of the action by the person to be evaluated to an evaluation item in a predetermined task, and evaluate the action by the person to be evaluated on the basis of a result of the contribution analysis. Furthermore, one of features of the contribution analysis described above is to include generating, by the classifier generated by the machine learning algorithm, a two-dimensional map in which a plurality of objects is arranged on a plane, on the basis of attributes of the plurality of objects that is targets of the action by the person to be evaluated input and the action result data for the objects.

According to the configuration described above, it is possible to implement more appropriate evaluation for the action by the person to be evaluated.

In the above, the preferred embodiments of the present disclosure have been described in detail with reference to the accompanying drawings, but the technical scope of the present disclosure is not limited to such examples. It is obvious that persons having ordinary knowledge in the technical field of the present disclosure can conceive various modification examples or correction examples within the scope of the technical idea described in the claims, and it is understood that the modification examples or correction examples also belong to the technical scope of the present disclosure.

Furthermore, the steps regarding the processing described in this specification do not necessarily have to be processed in time series in the order described in the flowchart or the sequence diagram. For example, the steps regarding the processing of each device may be processed in an order different from the described order or may be processed in parallel.

Furthermore, the series of processing steps by each device described in the present specification may be implemented by using any of software, hardware, and a combination of software and hardware. The program constituting the software is stored in advance in, for example, a recording medium (non-transitory medium) provided inside or outside each device. Then, each program is read into the RAM at the time of execution by the computer, for example, and is executed by various processors. The recording medium described above is, for example, a magnetic disk, an optical disk, a magneto-optical disk, a flash memory, or the like. Furthermore, the computer program described above may be distributed via, for example, a network without using a recording medium.

Furthermore, the effects described in the present specification are merely illustrative or exemplary and not restrictive. That is, the technology according to the present disclosure can achieve other effects that are obvious to those skilled in the art from the description in the present specification, in addition to or instead of the effects described above.

Note that, the following configurations also belong to the technical scope of the present disclosure.

(1) An information processing device including

an evaluation unit that performs evaluation of an action by a person to be evaluated on the basis of action result data indicating a result of the action by the person to be evaluated regarding a predetermined task,
in which
the evaluation unit performs contribution analysis that analyzes a contribution of the action by the person to be evaluated to an evaluation item in the predetermined task, and evaluates the action by the person to be evaluated on the basis of a result of the contribution analysis, and
the contribution analysis includes generating, by a classifier generated by a machine learning algorithm, a two-dimensional map in which a plurality of objects is arranged on a plane, on the basis of input attributes of the plurality of objects that is targets of the action by the person to be evaluated and the action result data for the objects.

(2) The information processing device according to (1), in which
the contribution analysis further includes expressing an intensity regarding the evaluation item and an intensity regarding the action by the person to be evaluated in a heat map form in the two-dimensional map.
(3) The information processing device according to (2), in which
the evaluation unit evaluates whether or not the contribution of the action by the person to be evaluated to the evaluation item is due to an ability of the person to be evaluated, on the basis of the two-dimensional map.
(4) The information processing device according to (3), in which
the evaluation unit evaluates a region in which a region having a high intensity regarding the evaluation item and a region having a high intensity regarding the action by the person to be evaluated overlap with each other in the two-dimensional map, as a region having a high contribution due to the ability of the person to be evaluated.
(5) The information processing device according to (3) or (4), in which
the evaluation unit evaluates a region in which a region having a high intensity regarding the evaluation item and a region having a low intensity regarding the action by the person to be evaluated overlap with each other in the two-dimensional map, as a region having a low contribution due to the ability of the person to be evaluated.
(6) The information processing device according to any of (3) to (5), in which

the evaluation unit evaluates, as a region to be evaluated as,
a region in which a region having a low intensity regarding the evaluation item and a region having a high intensity regarding the action by the person to be evaluated overlap with each other in the two-dimensional map, as a region in which there is a possibility that an action by the action by the person to be evaluated affects a decrease in the evaluation item.

(7) The information processing device according to any of (3) to (6), in which
the predetermined task includes asset management.
(8) The information processing device according to any of (3) to (7), in which
the action by the person to be evaluated includes a trade transaction of a financial product.
(9) The information processing device according to (7) or (8), in which
the evaluation unit evaluates a region in which a region having a high intensity of an active return and a region having a high intensity of an active weight overlap with each other in the two-dimensional map, as a region in which a profit is generated due to the ability of the person to be evaluated.
(10) The information processing device according to any of (7) to (9), in which
the evaluation unit evaluates a region in which a region having a high intensity of an active return and a region having a low intensity of an active weight overlap with each other in the two-dimensional map, as a region in which a profit is generated by luck.
(11) The information processing device according to any of (7) to (10), in which
the evaluation unit evaluates a region in which a region having a low intensity of an active return and a region having a high intensity of an active weight overlap with each other in the two-dimensional map, as a region in which a loss is generated due to the action by the person to be evaluated.
(12) The information processing device according to any of (7) to (11), in which
the evaluation unit evaluates a region in which a region having a high intensity of an active return and a region having a high intensity of a trading volume overlap each other in the two-dimensional map, as a region in which a profit is generated due to the ability of the person to be evaluated.
(13) The information processing device according to any of (7) to (12), in which
the evaluation unit evaluates a region in which a region having a high intensity of an active return and a region having a low intensity of a trading volume overlap with each other in the two-dimensional map, as a region in which a profit is generated by luck.
(14) The information processing device according to any of (7) to (13), in which
the evaluation unit evaluates a region in which a region having a low intensity of an active return and a region having a high intensity of a trading volume overlap with each other in the two-dimensional map, as a region in which a loss is generated due to the action by the person to be evaluated.
(15) The information processing device according to any of (3) to (6), in which
the predetermined task includes a contract with a customer.
(16) The information processing device according to any of (3) to 6 or 15, in which
the action by the person to be evaluated includes a sales activity.
(17) The information processing device according to any of (1) to (16), in which
the classifier includes a self-organizing map.
(18) The information processing device according to any of (1) to (17),

further including
an output unit that outputs a result of evaluation by the evaluation unit.

(19) An information processing method including

performing evaluation, by a processor, of an action by a person to be evaluated on the basis of action result data indicating a result of the action by the person to be evaluated regarding a predetermined task,
in which
performing the evaluation further includes performing contribution analysis that analyzes a contribution of the action by the person to be evaluated to an evaluation item in the predetermined task, and evaluating the action by the person to be evaluated on the basis of a result of the contribution analysis, and

the contribution analysis includes generating, in a classifier generated by a machine learning algorithm, a two-dimensional map in which a plurality of objects is arranged on a plane, on the basis of input attributes of the plurality of objects that is targets of the action by the person to be evaluated and the action result data for the objects.

(20) A program for causing a computer
to function as

an information processing device including
an evaluation unit that performs evaluation of an action by a person to be evaluated on the basis of action result data indicating a result of the action by the person to be evaluated regarding a predetermined task,
in which
the evaluation unit performs contribution analysis that analyzes a contribution of the action by the person to be evaluated to an evaluation item in the predetermined task, and evaluates the action by the person to be evaluated on the basis of a result of the contribution analysis, and
the contribution analysis includes generating, in a classifier generated by a machine learning algorithm, a two-dimensional map in which a plurality of objects is arranged on a plane, on the basis of input attributes of the plurality of objects that is targets of the action by the person to be evaluated and the action result data for the objects.

REFERENCE SIGNS LIST

| 10 | Learning device |
| 110 | Learning unit |
| 120 | Storage unit |
| 20 | Evaluation device |
| 210 | Evaluation unit |
| 215 | Classifier |
| 220 | Storage unit |
| 230 | Output unit |

**Claims**

1. An information processing device comprising

    an evaluation unit that performs evaluation of an action by a person to be evaluated on a basis of action result data indicating a result of the action by the person to be evaluated regarding a predetermined task,
    wherein
    the evaluation unit performs contribution analysis that analyzes a contribution of the action by the person to be evaluated to an evaluation item in the predetermined task, and evaluates the action by the person to be evaluated on a basis of a result of the contribution analysis, and
    the contribution analysis includes generating, by a classifier generated by a machine learning algorithm, a two-dimensional map in which a plurality of objects is arranged on a plane, on a basis of input attributes of the plurality of objects that is targets of the action by the person to be evaluated and the action result data for the objects.

2. The information processing device according to claim 1, wherein the contribution analysis further includes expressing an intensity regarding the evaluation item and an intensity regarding the action by the person to be evaluated in a heat map form in the two-dimensional map.

3. The information processing device according to claim 2, wherein the evaluation unit evaluates whether or not the contribution of the action by the person to be evaluated to the evaluation item is due to an ability of the person to be evaluated, on a basis of the two-dimensional map.

**4.** The information processing device according to claim 3, wherein the evaluation unit evaluates a region in which a region having a high intensity regarding the evaluation item and a region having a high intensity regarding the action by the person to be evaluated overlap with each other in the two-dimensional map, as a region having a high contribution due to the ability of the person to be evaluated.

**5.** The information processing device according to claim 3, wherein the evaluation unit evaluates a region in which a region having a high intensity regarding the evaluation item and a region having a low intensity regarding the action by the person to be evaluated overlap with each other in the two-dimensional map, as a region having a low contribution due to the ability of the person to be evaluated.

**6.** The information processing device according to claim 3, wherein the evaluation unit evaluates, as a region to be evaluated as,
a region in which a region having a low intensity regarding the evaluation item and a region having a high intensity regarding the action by the person to be evaluated overlap with each other in the two-dimensional map, as a region in which there is a possibility that an action by the action by the person to be evaluated affects a decrease in the evaluation item.

**7.** The information processing device according to claim 3, wherein the predetermined task includes asset management.

**8.** The information processing device according to claim 3, wherein
the action by the person to be evaluated includes a trade transaction of a financial product.

**9.** The information processing device according to claim 7, wherein
the evaluation unit evaluates a region in which a region having a high intensity of an active return and a region having a high intensity of an active weight overlap with each other in the two-dimensional map, as a region in which a profit is generated due to the ability of the person to be evaluated.

**10.** The information processing device according to claim 7, wherein
the evaluation unit evaluates a region in which a region having a high intensity of an active return and a region having a low intensity of an active weight overlap with each other in the two-dimensional map, as a region in which a profit is generated by luck.

**11.** The information processing device according to claim 7, wherein
the evaluation unit evaluates a region in which a region having a low intensity of an active return and a region having a high intensity of an active weight overlap with each other in the two-dimensional map, as a region in which a loss is generated due to the action by the person to be evaluated.

**12.** The information processing device according to claim 7, wherein
the evaluation unit evaluates a region in which a region having a high intensity of an active return and a region having a high intensity of a trading volume overlap each other in the two-dimensional map, as a region in which a profit is generated due to the ability of the person to be evaluated.

**13.** The information processing device according to claim 7, wherein
the evaluation unit evaluates a region in which a region having a high intensity of an active return and a region having a low intensity of a trading volume overlap with each other in the two-dimensional map, as a region in which a profit is generated by luck.

**14.** The information processing device according to claim 7, wherein
the evaluation unit evaluates a region in which a region having a low intensity of an active return and a region having a high intensity of a trading volume overlap with each other in the two-dimensional map, as a region in which a loss is generated due to the action by the person to be evaluated.

**15.** The information processing device according to claim 3, wherein the predetermined task includes a contract with a customer.

**16.** The information processing device according to claim 3, wherein
the action by the person to be evaluated includes a sales activity.

**17.** The information processing device according to claim 1, wherein the classifier includes a self-organizing map.

**18.** The information processing device according to claim 1,

further comprising
an output unit that outputs a result of evaluation by the evaluation unit.

**19.** An information processing method comprising

performing evaluation, by a processor, of an action by a person to be evaluated on a basis of action result data indicating a result of the action by the person to be evaluated regarding a predetermined task, wherein
performing the evaluation further includes performing contribution analysis that analyzes a contribution of the action by the person to be evaluated to an evaluation item in the predetermined task, and evaluating the action by the person to be evaluated on a basis of a result of the contribution analysis, and
the contribution analysis includes generating, in a classifier generated by a machine learning algorithm, a two-dimensional map in which a plurality of objects is arranged on a plane, on a basis of input attributes of the plurality of objects that is targets of the action by the person to be evaluated and the action result data for the objects.

**20.** A program for causing a computer
to function as

an information processing device including
an evaluation unit that performs evaluation of an action by a person to be evaluated on a basis of action result data indicating a result of the action by the person to be evaluated regarding a predetermined task, wherein
the evaluation unit performs contribution analysis that analyzes a contribution of the action by the person to be evaluated to an evaluation item in the predetermined task, and evaluates the action by the person to be evaluated on a basis of a result of the contribution analysis, and
the contribution analysis includes generating, in a classifier generated by a machine learning algorithm, a two-dimensional map in which a plurality of objects is arranged on a plane, on a basis of input attributes of the plurality of objects that is targets of the action by the person to be evaluated and the action result data for the objects.

# FIG. 1

# FIG. 2

*FIG. 3*

M0

$\left(\begin{array}{l}\text{ATTRIBUTE OF OBJECT,}\\\text{ACTION RESULT DATA}\end{array}\right)$   ID

116

NN

215

CLASSIFIER

EP 4 020 347 A1

# FIG. 4

<Active return map>

over

neutral

under

EP 4 020 347 A1

FIG. 5

<Active weight map>

M2

over

neutral

under

EP 4 020 347 A1

# FIG. 6

<Active return & Active weight map>

Good choice

Luck

Bad choice

neutral

# FIG. 7

\<Trading volume map\>

EP 4 020 347 A1

*FIG. 8*

<Active return & Trading volume map>

M5

Good trade

Bad trade

Luck

neutral

## FIG. 9

‹ORDER AMOUNT MAP›

HIGH

MEDIUM

LOW

EP 4 020 347 A1

# FIG. 10

<PERSON-IN-CHARGE-OF-CUSTOMERS AGE MAP>

M7

51–

36–50

–35

EP 4 020 347 A1

# FIG. 11

<ORDER AMOUNT & PERSON-IN-CHARGE-OF-CUSTOMERS AGE MAP>　M8

## FIG. 12

‹CONTRACT MAP› M9

ESTABLISHED

NOT ESTABLISHED

# FIG. 13

〈CUSTOMER VISIT MAP〉

LARGE

MEDIUM

SMALL

EP 4 020 347 A1

## FIG. 14

<CONTRACT & NUMBER OF VISITS MAP>

M11

ESTABLISHED

NOT ESTABLISHED

EP 4 020 347 A1

# FIG. 15

```
        ( START )
            │
            ▼                                    S102
┌───────────────────────────────┐
│   INPUT ATTRIBUTE OF OBJECT,   │
│      ACTION RESULT DATA        │
└───────────────────────────────┘
            │
            ▼                                    S104
┌───────────────────────────────┐
│     EXECUTE CONTRIBUTION       │
│    ANALYSIS USING CLASSIFIER   │
└───────────────────────────────┘
            │
            ▼                                    S106
┌───────────────────────────────┐
│   PERFORM EVALUATION BASED ON  │
│ RESULT OF CONTRIBUTION ANALYSIS│
└───────────────────────────────┘
            │
            ▼                                    S108
┌───────────────────────────────┐
│    OUTPUT EVALUATION RESULT    │
└───────────────────────────────┘
            │
            ▼
         ( END )
```

## FIG. 16

| PERSON TO BE EVALUATED | Active retuen (1 year) | Active retuen (3 years) | ABILITY EVALUATION |
|---|---|---|---|
| COMPANY A | 4.0% | 10.5% | SOMEWHAT ABILITY |
| COMPANY B | 2.5% | 9.6% | ABILITY |
| COMPANY C | −1.2% | 12.2% | SOMEWHAT ABILITY |

# FIG. 17

INFORMATION PROCESSING DEVICE — 90

PROCESSOR 871　ROM 872　RAM 873

874

BRIDGE — 875

876

877

I/F

INPUT DEVICE 878　OUTPUT DEVICE 879　STORAGE 880　DRIVE 881　CONNECTION PORT 882　COMMUNICATION DEVICE 883

REMOVABLE STORAGE MEDIUM 901　STORAGE DEVICE 902

EP 4 020 347 A1

**INTERNATIONAL SEARCH REPORT**

| International application No. |
| --- |
| PCT/JP2020/030779 |

**A. CLASSIFICATION OF SUBJECT MATTER**
G06Q 10/06(2012.01)i; G06Q 40/06(2012.01)i
FI: G06Q10/06 332; G06Q40/06

According to International Patent Classification (IPC) or to both national classification and IPC

**B. FIELDS SEARCHED**

Minimum documentation searched (classification system followed by classification symbols)
G06Q10/06; G06Q40/06

Documentation searched other than minimum documentation to the extent that such documents are included in the fields searched
Published examined utility model applications of Japan     1922–1996
Published unexamined utility model applications of Japan   1971–2020
Registered utility model specifications of Japan           1996–2020
Published registered utility model applications of Japan   1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | 人工知能を利用して、「働き方改革」を支援するコンサルティングサービスを提供開始, [online], 04 August 2017, [retrieved on 04 November 2020], Internet <URL:https://www.nri.com/-/media/Corporate/jp/Files/PDF/news/newsrelease/cc/2017/170804_1.pdf>, pp. 1-4, non-official translation ("The start of providing consulting services to support 'work style reform' using artificial intelligence") | 1,2,17-20 |
| Y | AI による業務可視化から始める働き方改革, 富士通フォーラム 2019, 17 May 2019 (accession date) pp. 1-2, ("Workplace Innovation starting with business visualization by AI", Fujitsu Forum 2019) | 1,2,17-20 |

☒ Further documents are listed in the continuation of Box C.　　☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 November 2020 (04.11.2020) | 17 November 2020 (17.11.2020) |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

| | INTERNATIONAL SEARCH REPORT | International application No. |
|---|---|---|
| | | PCT/JP2020/030779 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2019-70913 A (NOMURA RESEARCH INSTITUTE, LTD.) 09 May 2019 (2019-05-09) paragraphs [0039]-[0056], [0060]-[0067] | 1-20 |
| A | AI 時代の働き方改革, 日経コンピュータ, 24 January 2019, no. 982, ISSN:0285-4619, pp. 60-61, ("Work style reform in the AI era", NIKKEI COMPUTER) | 1-20 |

Form PCT/ISA/210 (continuation of second sheet) (January 2015)

| INTERNATIONAL SEARCH REPORT | International application No. |
|---|---|
| Information on patent family members | PCT/JP2020/030779 |

| Patent Documents referred in the Report | Publication Date | Patent Family | Publication Date |
|---|---|---|---|
| JP 2019-70913 A | 09 May 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009245368 A